# EUROPÄISCHE PATENTSCHRIFT

(11) **EP 1 388 448 B1**
(45) Veröffentlichungstag und Bekanntmachung des Hinweises auf die Patenterteilung: **18.02.2009**
(21) Anmeldenummer: 03009651.5
(22) Anmeldetag: 30.04.2003
(51) Int. Cl.: B60J 7/057

(54) **Verfahren zum Bewegen eines mehrteiligen Schiebedaches für ein Kraftfahrzeug**
Method for moving a multiple panel sliding roof for a vehicle
Procédé pour déplacer un toit coulissant en plusieurs parties pour un véhicule

(30) Priorität: 06.08.2002 DE 10235901
(43) Veröffentlichungstag der Anmeldung: 11.02.2004
(73) Patentinhaber: Dr. Ing. h.c. F. Porsche Aktiengesellschaft, 70435 Stuttgart (DE)
(72) Erfinder: Ritter, Bernhard, 75181 Pforzheim (DE)

(56) Entgegenhaltungen:
- DE-A- 3 324 107
- DE-A- 10 061 187
- DE-A- 10 062 736
- DE-C- 19 941 984
- US-A- 5 749 617
- US-A- 5 951 100

## Beschreibung

Die Erfindung betrifft ein Verfahren zum Bewegen eines mehrteiligen Schiebedaches für ein Kraftfahrzeug wie es beispielsweise bereits aus der DE 199 41 984 C1 und DE 10 062 736 bekannt ist. Dieses bekannte mehrteilige Schiebedach weist einen ersten winkelbewegten Dachabschnitt und mindestens einen zweiten und dritten in Fahrzeuglängsrichtung längs bewegbaren Dachabschnitt zum positionierten Verschließen und Freigeben einer Dachöffnung auf. An diese bewegbaren Dachabschnitte schließt sich ein vierter fester Dachabschnitt an. Die beweglichen Dachabschnitte und der Windabweiser können jeweils separat angesteuert werden, um so verschiedene Dachöffnungen zu realisieren.

Das erfindungsgemäße Verfahren gibt verschiedene Möglichkeiten der Ansteuerung der einzelnen Dachabschnitte und des Windabweisers an, die eine entsprechend geordnete Bewegung der einzelnen Dachabschnitte zur Folge hat, um so die Sicherheit der Personen im Fahrzeug zu erhöhen und beispielsweise eine Schließkraftbegrenzung zu gewährleisten.

Durch die weiteren in den abhängigen Ansprüchen aufgeführten Maßnahmen sind vorteilhafte Weiterbildungen und Verbesserungen des erfindungsgemäßen Verfahrens möglich. So kann bei der Ausführung der Dachelemente als transparente Bauteile zusätzlich ein Sonnenrollo vorgesehen werden, welches ebenfalls zusätzlich zur Eigenansteuerung über einen zugeordneten Schalter bei Betätigung der Dachmodule über eine Zwangssteuerung in eine Offenposition gefahren wird. Damit wird bei hohen Geschwindigkeiten vermieden, daß das Sonnenrollo bei geöffnetem Dach zu starker Belastung ausgesetzt wird.

Die Kopplung des Antriebes für den Windabweiser mit dem Antrieb für einen ersten zu öffnenden Dachabschnitt ermöglicht es, die Geräuschbelastung zu minimieren.

Das Vorsehen eines Drehschalters für die Auswahl der einzelnen möglichen Dachpositionen hat den Vorteil, dass mit einem einzigen Schalter alle Dachpositionen schaltbar sind. Die einzelnen Schaltpunkte sind so angeordnet, dass die verschiedenen Bedingungen für eine Bewegung der einzelnen beweglichen Dachabschnitte in einer logischen Nacheinander anzufahrenden Position liegen. Vorteilhafterweise weist der Drehschalter diskrete haptische Schaltpunkte für definierte Positionen auf.

Einzelheiten der Erfindung werden in der Zeichnung näher dargestellt und in der nachfolgenden Beschreibung genauer erläutert.

Es zeigen
- Fig. 1: ein Konzept für die Verkabelung und Ansteuerung des mehrteiligen Schiebedaches,
- Fig. 2: den Drehschalter für die Ansteuerungen des mehrteiligen Schiebedaches und
- Fig. 3: mit den Abbildungen 3a bis 3f die verschiedenen möglichen Positionen mehrteiligen Schiebedaches.

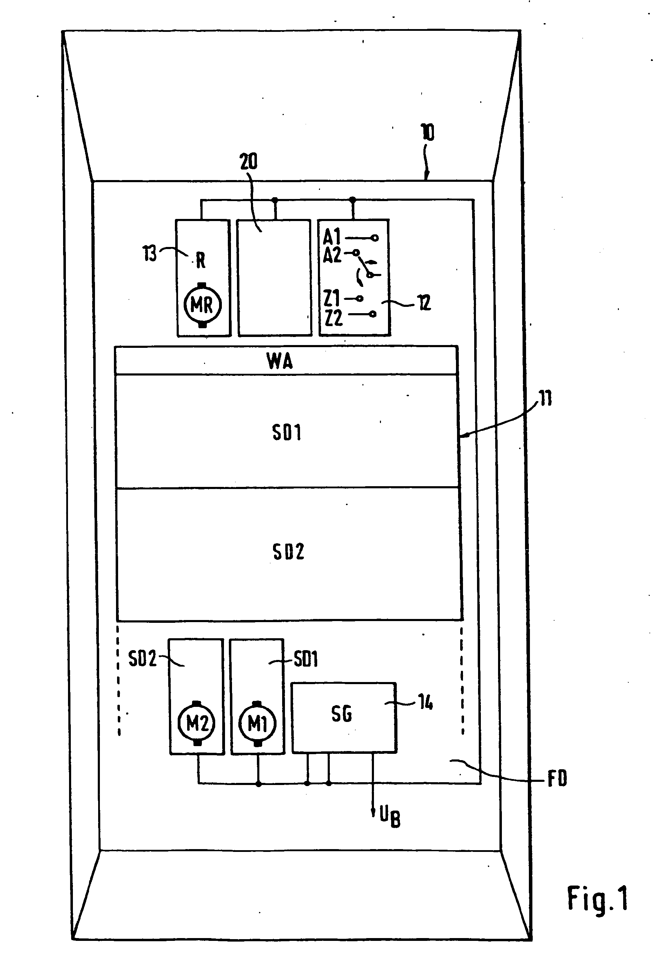

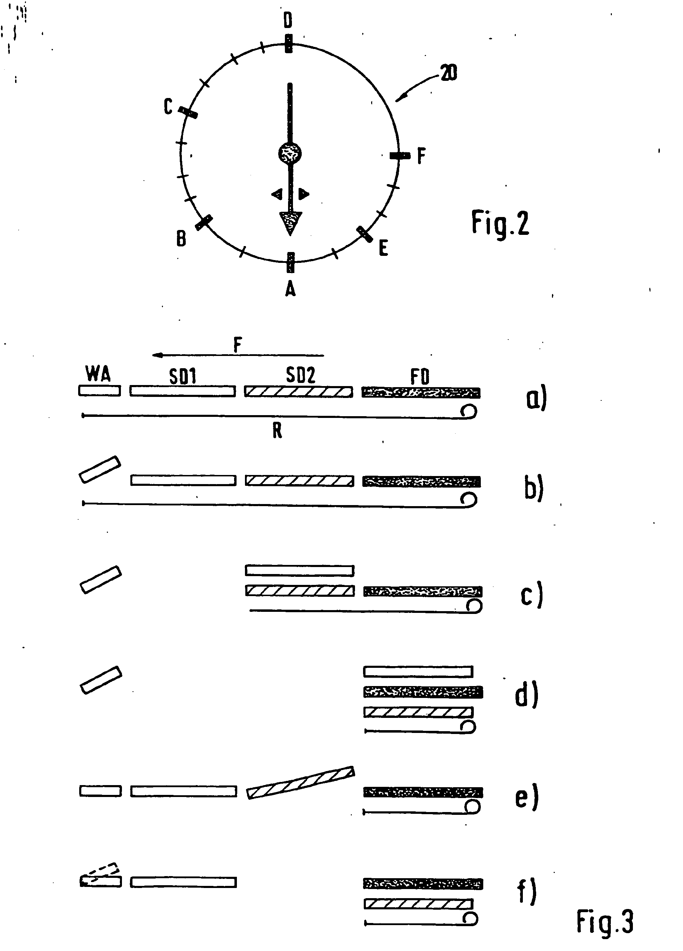

Fig. 1 zeigt als Prinzipübersicht die Anordnung der einzelnen Bauteile für die Ansteuerung des mehrteiligen Schiebedaches, wobei die Größenverhältnisse aus Gründen der Übersichtlichkeit nicht berücksichtigt wurden. Das Fahrzeug bzw. das Fahrzeugdach selbst sind hier nur schematisch als Rechtecke angegeben, wobei das kleinere Rechteck 10 das Dach des Fahrzeuges darstellt. In dem Fahrzeugdach 10 ist ein mehrteiliges Schiebedach 11 integriert, welches aus dem Windabweiser WA, einem in Längsrichtung beweglichen ersten Schiebedachteil SD1 und einem in Längsrichtung beweglichen zweiten Schiebedachteil SD2 besteht. An diese beweglichen Dachabschnitte schließt sich ein fester Dachabschnitt FD an, welcher in Figur 1 nur als gestrichelter Abschnitt angegeben ist. Alle Dachabschnitte können auch transparent ausgeführt sein. In diesem Fall ist unterhalb des mehrteiligen Schiebedaches ein Sonnenrollo R angeordnet, welches in Fig. 3a bis f dargestellt ist. Dieses Sonnenrollo R wird von einem Wipptaster 12 angesteuert, wobei der Wipptaster 12 vier verschiedene Schaltpunkte aufweist. Diese vier verschiedenen Schaltpunkte setzen sich zusammen aus zwei Schaltpunkten A1 und A2 für die AUF Position und zwei Schaltpunkten Z1 und Z2 für die ZU Position. Das bedeutet, ein Schließen des Schaltkontaktes A1 bewirkt eine Bewegung des Rollos, solange der Wipptaster 12 betätigt wird, während ein Weiterbewegen des Wipptasters 12 über den Schaltpunkt A1 hinaus bis zum Schaltpunkt A2 eine Bewegung des Sonnenrollos bewirkt, ohne dass der Wippschalter 12 dauernd betätigt werden muss. Für ein Schließen des Sonnenrollos R gilt für die Schaltpunkte Z1 und Z2 analog das Gleiche. Eine Betätigung des Schaltkontaktes Z1 bewirkt mit der sogenannten Funktion "Tasten" eine Rollobewegung, solange der Wipptaster 12 gedrückt ist. Der Schaltpunkt Z2 wird als "Tipp" Funktion bezeichnet und bewirkt nach einer Betätigung eine automatische Bewegung des Sonnenrollos. Jede dieser eben beschriebenen Bewegungen zum Öffnen oder Schließen kann über ein nochmaliges Betätigen des Wipptasters 12 gestoppt werden.
Das mehrteilige Schiebedach 11 wird über einen Drehschalter 20 angesteuert. Dieser Drehschalter 20 ist mit einem Steuergerät 14 verbunden, welches die Position der einzelnen Teile des mehrteiligen Schiebedaches vor der Betätigung des Drehschalters 20 kennt und aufgrund der neuen gewählten Schaltposition des Drehschalters 20 eine entsprechende Ansteuerung eines Motors M1 für das erste Schiebedachteil SD1 bzw. eines Motors M2 für das zweite Schiebedachteil SD2 ansteuert. Der Motor M1 zur Ansteuerung des ersten Schiebedachabschnittes SD1 ist mechanisch ebenfalls mit dem Windabweiser WA gekoppelt, so dass ein Öffnen des ersten Schiebedachabschnittes SD1 automatisch auch ein Anstellen des Windabweisers WA zur Folge hat. Bei einer Ansteuerung des Motors M1 zum Öffnen des ersten Schiebedachteils SD1 erfolgt somit zwangsgesteuert auch ein Kippen des Windabweisers WA. Dabei wird die Neigung des Windabweisers WA in Abhängigkeit der Öffnungsweite des ersten Schiebedachabschnittes in der Art angesteuert, dass ein vollkommen geöffneter erster Schiebedachabschnitt ein maximales Kippen des Windabweisers WA bewirkt.

Das Steuergerät 14 ist mit der Versorgungsspannung UB der Batterie des Fahrzeuges verbunden und mit den weiteren Steuergeräten des Fahrzeuges und/oder Sensoren zur Erfassung des Betriebszustandes vernetzt und erhält beispielsweise über einen CAN-Bus weitere für die Ansteuerung des mehrteiligen Schiebedaches notwendige Informationen. So ist es z.B. möglich, die Information eines hier nicht dargestellten Sonnensensors bzw. eines nicht dargestellten Regensensors auszuwerten und bei Überschreiten einer zulässigen Sonneneinstrahlung, das Sonnenrollo SR zu betätigen bzw. bei einsetzendem Regen das mehrteilige Schiebedach zu schließen. Das Steuergerät 14 koordiniert weiterhin die Ansteuerung der drei Antriebsmotoren M1, M2 und MR um bei einem überlagerten zeitlichen Ablauf der einzelnen bewegbaren Dachteile ein Einklemmen zu verhindern.

Fig. 2 zeigt den Drehschalter 20 zur Auswahl der verschiedenen Positionen des mehrteiligen Fahrzeugdaches. Der dargestellte Drehschalter 20 zeigt 16 Positionen, die vorwählbar sind, und wobei sechs Positionen A bis F als Vorzugspositionen definiert sind, die als haptische Schaltpunkte vorgesehen sind. Diese gezeigte Ausführung des Drehschalters 20 ist jedoch nur ein Möglichkeit verschiedene Öffnungspositionen auszuwählen. Denkbar ist auch, dass in einer vereinfachten Form auf verschiedene Wahlpositionen verzichtet wird bzw., dass einzelne Positionen zusammengefasst sind. Bevor das mehrteilige Schiebedach für eine Bewegung freigegeben wird, sind im Steuergerät verschiedene Bedingungen definiert, die vorliegen müssen. Anderenfalls gibt das Steuergerät 14 die Bewegung nicht frei. Eine dieser Bedingungen ist das Abfragen der Zündung. Nur wenn das Steuergerät 14 Zündung EIN erkennt, erfolgt ein Freigabesignal an die Antriebsmotoren.

In der Fig. 3 sind sechs verschiedene Öffnungspositionen des mehrteiligen Schiebedaches des Fahrzeuges angegeben. Hierbei entspricht die jeweilige Fig. a bis f einer Vorzugsposition A bis F des Drehschalters 20 aus Fig. 2.
In Fig. 3a, sie entspricht der Schaltposition A sind der Windabweiser WA, das Schiebedach 1 SD1, das Schiebedach 2 SD2 und das Sonnenrollo R geschlossen. Wird nun der Drehschalter 20 von der Position A zur Position B bewegt, dann öffnet sich der Windabweiser WA in der Art, daß er eine Schrägstellung einnimmt, wie das in Figur 3b dargestellt ist. Die Ansteuerung des Öffnungswinkels kann hierbei geschwindigkeitsabhängig erfolgen.
Bei einem Weiterdrehen des Drehschalters 20 zur Position C öffnet sich der Schiebedachteil 1 SD1 in der Art, daß er aus seiner Schließposition heraus angehoben wird und anschließend nach hinten über das Schiebedachteil SD2 fährt. Gleichzeitig öffnet sich das Rollo R so weit, daß es wiederum mindestens den nunmehr freiligenden Dachausschnitt freigibt, so dass die Öffnungspositionen gemäß Figur 3c vorliegen.
Wird der Schalter 20 in diese Richtung bis zur Position D weiterbewegt, so liegt die in Fig. 3d dargestellte Öffnungsform des mehrteiligen Schiebedaches vor. Das bedeutet, der Windabweiser WA ist angestellt, und beide Schiebedachteile SD1 und SD2 befinden sich in Offen-Position. Hierbei wird der erste Schiebedachabschnitt SD1 über das Festdach FD und den Schiebedachabschnitt SD2 unter das Festdach FD des Fahrzeuges gefahren. Das Sonnenrollo R wird ebenfalls wieder zwangsgesteuert, wenn es nicht bereits vom Fahrer durch Betätigen des Schalters 12 in die entsprechende Offen-Position bewegt wurde. Zusätzlich kann hier noch eine Funktion integriert werden, die den zweiten Schiebedachabschnitt SD2 wieder aus der vollkommen geöffneten Position wieder um einen vorgebbaren Betrag zufährt, wenn die Geschwindigkeit über einer definierten Schwelle liegt. Damit können unangenehme Wummergeräusche im Fahrzeuginnenraum vermieden zumindest aber reduziert werden.
Die eben beschriebenen Schaltpositionen A, B, C und D befinden sich in einer Drehrichtung des Schalters 20 und geben die logische Abfolge der Bewegungen der einzelnen Dachabschnitte ausgehend vom geschlossenen Dach 3a bis zum vollständig geöffneten Dach 3d. Entsprechend einem logischen Ablauf wird hierbei zuerst der Windabweiser WA, dann der erste Schiebedachabschnitt SD1 und anschließend der zweite Schiebedachabschnitt SD2 geöffnet. Beim Schließen erfolgt die Ansteuerung in umgekehrter Reihenfolge. Das bedeutet, wenn der Drehschalter 20 von der Schaltposition D in die Schaltposition A bewegt wird, dann wird zunächst der Schiebedachabschnitt SD2 geschlossen, dann der Schiebedachabschnitt SD1 und zum Schluss der Windabweiser WA, wobei die Ansteuerung des ersten Schiebedachabschnitts SD1 und des Windabweisers WA aufgrund des gemeinsamen Antriebsmotors so erfolgt, dass beide Bauteile annähernd gleichzeitig die Geschlossen-Position erreichen.

Wird der Drehschalter 20 ausgehend von der Position A in die andere Drehrichtung bewegt, so erfolgt bei der Schaltposition E ein Anheben des zweiten Schiebedachabschnittes SD2 in eine Hubposition.
Die Schaltposition F bewirkt ein Öffnen des zweiten Schiebedachabschnittes SD2 in der Art, dass ausgehend von der Hubposition des zweiten Schiebedachabschnittes SD2 zunächst der zweite Schiebedachabschnitt SD2 abgesenkt wird und anschließend unter das Festdach FD des Fahrzeuges gefahren. Wahlweise kann bei der Schaltposition F auch der Windabweiser WA angestellt werden, was in der Figur 3d durch die gestrichelte Zeichnung des Windabweisers dargestellt ist. Gleichzeitig wird das Sonnenrollo in eine Offen-Position gefahren. Zur Schaltposition F ist folgendes auszuführen. Wird der Drehschalter direkt von der Schaltposition A ohne Zwischenstoppen des Drehschalters 20 auf die Position F geschaltet, dann erkennt das Steuergerät 14 dies und das Passieren der Schaltposition E bleibt ohne Bedeutung.
Das eben gesagte trifft für alle einzunehmenden Schaltpositionen zu. Dem Steuergerät liegen beim Erkennen eines Schaltvorganges am Drehschalter 20 sämtliche Informationen über die augenblicklichen Positionen der einzelnen Dachabschnitte vor und es wird ausgehend von der "Startsituation" und der nun gewünschten Dachposition, die jeweils sicherste und schnellste Art der Ansteuerung der einzelnen Antriebesmotoren bestimmen. Dies bedeutet beispielsweise, dass ausgehend von Position 3d als "Startsituation" und bei einer gewünschten Endposition 3f, der zweite Schiebedachschnitt SD2 in der Offen-Position verbleibt, während der erste Schiebedachabschnitt SD1 und der Windabweiser WA geschlossen werden.

Das Steuergerät 14 koordiniert die Bewegungen der einzelnen Abschnitte des mehrteiligen Schiebedaches. Bei einer unmittelbar aufeinanderfolgenden Betätigung des Schalters für das Sonnenrollo und des Schalters für das Großraumdach, merkt sich das SG jede augenblickliche Position und fährt dann nacheinander oder auch zeitlich überlappend die Endpositionen an. Hierbei kann es vorkommen, dass eine bereits eingeleitete Bewegung des Sonnenrollos gestoppt wird, dann der oder die Dachabschnitte in ihre Endposition gefahren werden, und anschließend die Bewegung des Sonnenrollos wieder aufgenommen wird.

In der Figur 2 sind zwischen den sechs Vorzugspositionen weitere Schaltpunkte angegeben, die jeweils nur ein teilweises Einnehmen der Endposition bestimmen. Damit ist es beispielsweise möglich den ersten Schiebedachabschnitt SD2 nur teilweise zu öffnen. Da der Windabweiser und der erste Schiebedachabschnitt SD1 mechanisch gekoppelt sind, ist es möglich auf die Schaltposition B, die nur den Windabweiser WA öffnet, als haptische Vorzugsposition zu verzichten.

Für die Ansteuerung gibt es, wie bereits eingangs erläutert, verschiedene Sperrfunktionen. So läßt sich das Schiebedach SD1 nicht öffnen, wenn SD2 wie in Position 3e, sich in Hubstellung befindet.
Das Sonnenrollo darf nicht im offenen Dachausschnitt stehen, so dass das Sonnenrollo auch ohne Betätigung des Schalters 12 in eine offene Position gefahren wird, wenn einer der Schiebedachabschnitte SD1 oder SD2 geöffnet wird.

Als weitere Komfort-Funktion ist es möglich, eine externe Bedienungseinheit beispielsweise am Zündschlüssel vorzusehen, die es ermöglicht das Fahrzeug insbesondere bei überheiztem Innenraum zu entlüften.

## Patentansprüche

1. Verfahren zum Bewegen eines mehrteiligen Schiebedaches für ein Kraftfahrzeug mit einem ersten winkelbeweglichen Dachabschnitt (WA) und mindestens einem zweiten (SD1) und dritten (SD2) in Fahrzeuglängsrichtung längs bewegbaren Dachbschnitten zum positionierten Verschließen und Freigeben einer Dachöffnung, wobei die längs bewegbaren Dachabschnitte mittels eines Betätigungselementes zur Auswahl verschiedener vorgegebenen Dachpositionen ansteuerbar sind, **dadurch gekennzeichnet, daß** mittels des Betätigungselementes (20) mindestens sechs Schaltpositionen und damit sechs verschiedene Positionen der einzelnen Dachabschnitte ausgewählt werden, wobei nach Auswahl verschiedener Schaltpositionen durch das Betätigungselement (20) Bewegungen verschiedner Teile des mehrteiligen Schiebedaches zwangsgesteuert durchgeführt werden ohne, dass ihre Bewegung durch das Betätigungselement (20) ausgewählt wurde, wobei auf der Fahrzeuginnenseite des mehrteiligen Schiebedaches ein Sonnenrollo SR vorgesehen ist, welches mit einem Sonnensensor gekoppelt ist und bei Erkennen einer massiven Sonneneinstrahlung automatisch in die Position Schließen gefahren wird und beim Ansteuern der einzelnen Dachteile zum Öffnen das Sonnenrollo automatisch in eine Position gefahren wird, dass es mindestens hinter der Vorderkante des Dachausschnitts zum Stehen kommt.

2. Verfahren nach Anspruch 1, **dadurch gekennzeichnet, daß** als Betätigungselement ein Drehschalter (20) mit mindestens sechs Vorzugsschalpositionen (A, B, C, D, E, F) verwendet wird.

3. Verfahren nach einem der vorherigen Ansprüche, **dadurch gekennzeichnet, dass** der Windabweiser (WA) abhängig von der Fahrgeschwindigkeit verstellbar ist.

4. Verfahren nach einem der vorherigen Ansprüche, **dadurch gekennzeichnet, dass** die einzelnen Schiebedachabschnitte nach einem Öffnen bei Überschreiten einer definierten Geschwindigkeit aus der vollkommen geöffneten Position wieder um einen vorgebbaren Betrag zugefahren werden.

## Claims

1. Method for moving a multiple panel sliding roof for a motor vehicle, with a first roof section (WA) which is movable at an angle, and with at least one second roof section (SD1) and third roof section (SD2) which are movable longitudinally in the longitudinal direction of the vehicle and are intended for the positioned closing and opening up of a roof opening, wherein the longitudinally movable roof sections can be activated by means of an actuating element in order to select different predetermined roof positions, **characterized in that** at least six switching positions and therefore six different positions of the individual roof sections are selected by means of the actuating element (20), with, after selection of different switching positions by the actuating element (20), movements of different parts of the multiple panel sliding roof being carried out in a positively controlled manner without their movement having been selected by the actuating element (20), and with a sun blind (SR) being provided on the inside of the multiple panel sliding roof, said sun blind being coupled to a sun sensor and, when a large amount of solar insolation is detected, is moved automatically into the closing position and, when the individual roof parts are activated for opening purposes, the sun blind is automatically moved into a position in which it comes to a standstill at least behind the front edge of the roof cutout.

2. Method according to Claim 1, **characterized in that** a rotary switch (20) with at least six preferred switching positions (A, B, C, D, E, F) is used as the actuating element.

3. Method according to one of the preceding claims, **characterized in that** the wind deflector (WA) can be adjusted as a function of the driving speed.

4. Method according to one of the preceding claims, **characterized in that,** after opening, the individual sliding roof sections are closed again from the fully open position by a predeterminable amount if a defined speed is exceeded.

## Revendications

1. Procédé pour déplacer un toit coulissant en plusieurs parties pour un véhicule automobile, comprenant une première partie de toit mobile angulairement (WA) et au moins une deuxième (SD1) et une troisième (SD2) parties de toit mobiles longitudinalement dans la direction longitudinale du véhicule vers une position de fermeture et d'ouverture d'une ouverture de toit, dans lequel les sections de toit mobiles longitudinalement peuvent être commandées au moyen d'un élément d'actionnement pour sélectionner différentes positions prédéterminées du toit, **caractérisé en ce que** l'on sélectionne au moyen de l'élément d'actionnement (20) au moins six positions de sélection et donc six positions différentes des diverses sections de toit, dans lequel, après la sélection de différentes positions de sélection par l'élément d'actionnement (20), on effectue des mouvements de différentes parties du toit coulissant en plusieurs parties par commande forcée sans que son mouvement ait été sélectionné par l'élément d'actionnement (20), dans lequel il est prévu, sur le côté intérieur au véhicule du toit coulissant en plusieurs parties, un pare-soleil SR qui est couplé à un détecteur de soleil et qui, en cas de reconnaissance d'un rayonnement solaire massif, est amené automatiquement dans la position de fermeture et, lors de la commande d'ouverture des différentes parties de toit, le pare-soleil est amené automatiquement dans une position dans laquelle il vient se placer au moins derrière l'arête avant de la section de toit.

2. Procédé selon la revendication 1, **caractérisé en ce que** l'on utilise comme élément d'actionnement un interrupteur rotatif (20) présentant au moins six positions de sélection préférées (A, B, C, D, E, F).

3. Procédé selon l'une quelconque des revendications précédentes, **caractérisé en ce que** le déflecteur de vent (WA) est réglable en fonction de la vitesse de circulation.

4. Procédé selon l'une quelconque des revendications précédentes, **caractérisé en ce que,** en cas de dépassement d'une vitesse définie après une ouverture, les différentes sections du toit coulissant sont ramenées en arrière dans une mesure prédéterminable à partir de la position entièrement ouverte.
